# EUROPEAN PATENT SPECIFICATION

(11) **EP 4 029 402 B1**
(45) Date of publication and mention of the grant of the patent: **08.05.2024**
(21) Application number: 20897535.9
(22) Date of filing: 30.11.2020
(51) Int. Cl.: A45C 5/04, A45C 5/14, A45C 13/00, E05B 65/52, A45C 5/00

(54) **MIDDLE FRAME AND ROTATING SHAFT SEPARATION SUITCASE HAVING SHOCK-ABSORBING STRUCTURE**
KOFFER MIT MITTELRAHMEN- UND DREHSCHAFTTRENNUNG MIT STOSSDÄMPFENDER STRUKTUR
VALISE À SÉPARATION D'ARBRES ROTATIFS ET DE CADRES INTERMÉDIAIRES AYANT UNE STRUCTURE ABSORBANT LES CHOCS

(30) Priority: 05.12.2019 CN 201911232258
(43) Date of publication of application: 20.07.2022
(73) Proprietor: Merit Technologies (Fujian) Co., Ltd., Quanzhou, Fujian 362600 (CN)
(72) Inventor: HOU, Yishun, Quanzhou, Fujian 362600 (CN); YU, Qun, Quanzhou, Fujian 362600 (CN)
(74) Representative: Chung, Hoi Kan
(86) International application number: PCT/CN2020/132563
(87) International publication number: WO 2021/109950

(56) References cited:
- EP-A1- 3 075 567
- EP-A2- 2 745 727
- CN-A- 104 287 380
- CN-A- 110 754 756
- CN-U- 203 646 690
- CN-U- 204 623 012
- CN-U- 205 848 945
- CN-U- 206 238 650
- CN-U- 206 319 725
- CN-U- 206 548 050
- CN-U- 207 538 630
- CN-U- 209 257 771
- CN-U- 211 186 124
- JP-U- 3 187 221
- US-A- 5 111 918
- US-A1- 2015 021 132

## Description

### FIELD OF THE DISCLOSURE

The invention relates to a trolley bag, especially to a trolley bag with separated middle frame and hinge and having shock-absorbing structure

### BACKGROUND OF THE DISCLOSURE

A trolley bag refers to a luggage with a trolley handle and wheels. Because of its convenience, it is an essential item for people to travel. With the rapid development of the tourism industry, the growth of the travel market has brought consumers' increasing demand for trolley bags, and also new opportunities and challenges for trolley bag manufactures.

At present, some of the trolley bags on the market do not have the shock-absorbing function. Although the others may absorb shock by having springs, the fabrication thereof can be complicated and cost a lot. In addition, the conventional zipper luggage is prone to deformation, resulting in inflexible movement of the wheel seat. The conventional middle-frame bags are too heavy to move. Furthermore, conventional locks on the trolley bags on the market require a lot of force to press after the luggage is full.

US2015/021132A discloses a luggage piece comprising a first shell and a second shell pivotably joined to the first shell, with a latch and a peripheral frame assembly that are substantially flush with the luggage shell.

### SUMMARY OF THE DISCLOSURE

Accordingly, an object of the present invention is to provide a trolley bag with separated middle frame and hinge and having shock-absorbing structure to solve the deficiency of the prior art.

In order to solve the aforementioned technical problem, the present invention provides the following technical solutions: a trolley bag with separated middle frame structure and hinge and having shock-absorbing structure includes a trolley handle, a rear case, a middle frame, and a front case. The middle frame structure includes a hinge structure and a pair of middle frames. One of the pair of middle frames is connected to the rear case, and the other one is connected to the front case. The present invention is characterized in that the hinge structure includes a pair of hinges and a core pin, one of the pair of hinges is connected to one of the middle frames, the other is connected to the other one of the middle frames. The pair of hinges are movably connected through the core pin. The pair of middle frames is locked together by an interlocking assembly. Shock-absorbing wheels are arranged at four corners of a bottom of the trolley bag; wherein the hinge has a connecting portion. A side wall of the connecting portion is provided with at least one rib portion at intervals along a length direction of the connecting portion. The middle frame is provided with a groove portion, and a bottom surface of the groove portion is provided with a connecting groove. A baffle portion matched with the rib portion is arranged on a side wall of the connecting groove. A notch adapted for the rib portion is formed on a rear side of the baffle portion. When the hinges are installed on the middle frames, the bottom surface of the baffle portion abuts against a top surface of the rib portion. The top of the connecting portion is spaced and connected to a plurality of bushings along the length direction of the connecting portion. Each of the bushings is provided with an axis hole matching with the core pin. The bushings of the pair of hinges are hinged through the core pin.

Furthermore, a front end of the connecting portion is connected to a first engaging portion. A front side of the groove portion is provided with a second engaging portion. A slot is opened on the second engaging portion. The first engagement portion is inserted into the slot to form a snap connection with the second engagement portion.

Furthermore, a top of the slot is provided with a snap hole, and a top of the first engagement portion is provided with a snap protrusion adapted for the snap hole.

Furthermore, a top surface of the rib portion is a first inclined surface which is formed obliquely. A bottom surface of the baffle portion is a second inclined surface which is formed obliquely. An angle between the second inclined surface and the side wall of the connecting groove is an acute angle. When the hinges are installed on the middle frames, the second inclined surface abuts against the first inclined surface.

As can be seen from the aforementioned technical solutions, the present invention has the following beneficial effects:

The trolley bag provided by the present invention utilizes shock-absorbing wheels, a multi-stage interlocking lock and separated hinge and middle frame structure. The trolley bag with a light and simple middle frame structure makes the trolley bag have a stable structure and not prone to deformation. With the shock-absorbing structure, pulling the luggage on walk will be smooth, and reducing the strength required by the human wrist. The multi-level interlocking structure makes it easier to close when the luggage is full, giving people a sense of lightness. The structure of the present invention is simple to assemble, and therefore saves labor costs.

The present invention will be further described in detail below with reference to the accompanying drawings and specific embodiments.

### BRIEF DESCRIPTION OF DRAWINGS

In order to illustrate the embodiments of the present invention or the technical solutions in the prior art more clearly, the following briefly introduces the accompanying drawings that are used in the description of the embodiments or the prior art. Obviously, the drawings in the following description are only embodiments of the present invention. For those of ordinary skill in the art, other drawings may also be obtained according to the provided drawings without creative efforts.
FIG. 1 is a schematic diagram of the three-dimensional structure of the present invention.
FIG. 2 is an exploded view of the present invention.
FIG. 3 is a schematic diagram of another three-dimensional structure of the present invention.
FIG. 4 is a schematic structural diagram of the connection between the hinge and the middle frame of the present invention.
FIG. 5 is a partial enlarged structural schematic diagram of X in FIG. 4.
FIG. 6 is a partial structural schematic diagram of the hinge of the present invention.
FIG. 7 is a schematic three-dimensional structure diagram of the hinge of the present invention.
FIG. 8 is a schematic structural diagram of the middle frame structure of the present invention.
FIG. 9 is a partial enlarged schematic view of the structure at Y in FIG. 8.
FIG. 10 is a schematic diagram of multiple middle frames being stacked and produced by injection molding at the same time.
FIG. 11 is a schematic structural diagram of the interlocking assembly of the present invention.
FIG. 12 is a schematic structural diagram of the interlocking assembly of the present invention when it is in an off state.
13 is an exploded view of the interlocking assembly of the present invention when it is in an off state.
FIG. 14 is a partial enlarged schematic view of the structure of FIG. 12.
FIG. 15 is a partial enlarged schematic view of the structure of FIG. 13.
FIG. 16 is a schematic structural diagram of the interlocking assembly of the present invention when it is in an on state.
FIG. 17 is a schematic diagram of the first structure of the shock-absorbing wheel of the present invention.
FIG. 18 is a schematic diagram of the first structure of the cushion pad of the shock-absorbing wheel of the present invention.
FIG. 19 is a schematic diagram of the second structure of the cushion pad of the shock-absorbing wheel of the present invention.
FIG. 20 is a schematic diagram of the third structure of the cushion pad of the shock-absorbing wheel of the present invention.
FIG. 21 is a schematic diagram of the second structure of the shock-absorbing wheel of the present invention.
FIG. 22 is a schematic diagram of the fourth structure of the cushion pad of the shock-absorbing wheel of the present invention.

In the drawings: 1-top handle; 2-trolley handle; 3-back case; 4-shck-abosrobing wheel; 41-wheel seat assembly; 411-axle seat; 412-buffer cavity; 413-roller seat; 414-tialstock; 415-rear seat; 4151-lift portion; 416-swing shaft; 417-opening; 42-cushion pad; 42a-first cushion pad; 42b-second cushion pad; 42c-third cushion pad; 42d-fourth cushion pad; 421-buffer hole; 422-buffer groove; 423- auxiliary bearing surface; 424-main bearing surface; 425-limit bottom surface; 426-protrusion; 427-recessed portion; 43-roller; 5-middle frame structure; 51-middle frame; 51a-first middle frame; 51b-second middle frame; 511-groove portion; 5111-connecting groove; 5112-baffle portion; 51121-second inclined surface; 5113-notch; 512-second engagement portion; 5121-slot; 5122-snap hole; 513-guide boss; 52-hinge; 521-connecting portion; 5211-rib portion; 52111-first inclined surface; 52112-inclined guide portion; 522-bushing; 5221-axis hole; 523-first engagement portion; 5231-snap protrusion; 52311-guide inclined surface; 524-guide groove; 6-side lock; 61-side lock case; 611-connecting seat; 62-side lock cylinder assembly; 621-second button; 6211-second tooth slot portion; 6212-third baffle surface; 6213-fourth baffle surface; 622-second gear; 623-second spring; 7-main lock; 71-main lock case; 711-lock seat; 712-lock cover; 7121-thorugh hole; 713-first cover; 714-second cover; 72-main lock cylinder assembly; 721-first button; 7211-first tooth slot portion; 7212-first baffle surface; 7213-second baffle surface; 722-first gear; 723-first spring; 73-control mechanism; 731-pusher; 7311-push torque; 7311-top plate portion; 7312-rack portion; 7313-tail surface; 7314-first indication surface; 7315-second indication surface; 732-reduction gear; 7321-gear wheel; 7322-pinion; 733-first rack; 734-second rack; 735-ball plunger; 736-ball plunger spring; 737-custom lock; 7371-press plate; 738-cable; 7381-external pipe sleeve; 7382-core cable; 8-lock hook; 81-protruion tooth; 9-front case; 10-vertical stripe; 11-first diagonal stripe; 12-second diagonal stripe.

### DETAILED DESCRIPTION OF THE DISCLOSURE

The embodiments of the present invention are described in detail below with reference to the accompanying drawings, but the present invention can be implemented in many different ways as defined and covered by the claims.

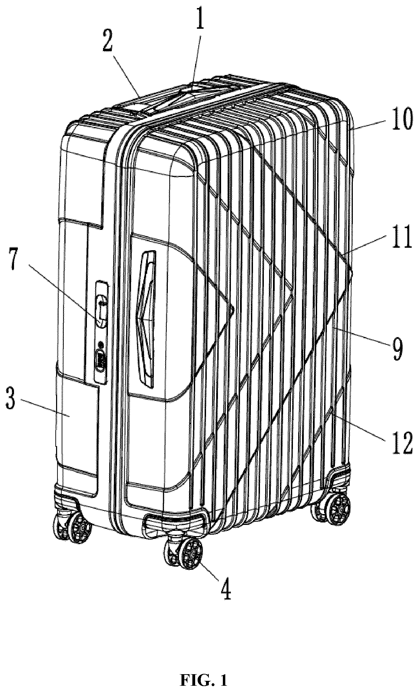

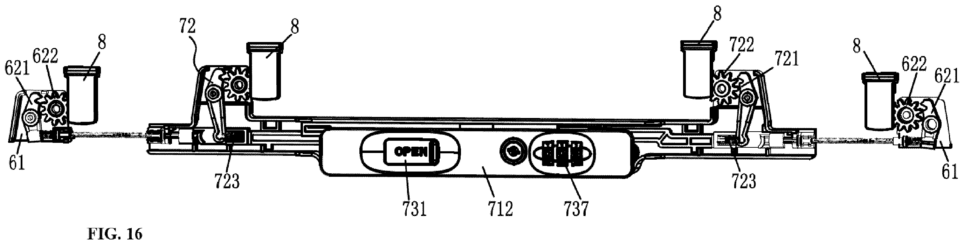

The present invention will be further described below with reference to FIG. 1 to FIG. 22. As shown in FIG. 1, FIG. 2, and FIG. 3, a trolley with separated middle frame and hinge and having shock-absorbing structure includes a trolley handle 2, a rear case 3, a middle frame structure 5, and a front case 9. The middle frame structure 5 includes two sets of hinge structures and a pair of middle frames 51. The two middle frames 51 are the first middle frame 51a and the second middle frame 51b. The first middle frame 51a is connected to the rear case 3, and the second middle frame 51b is connected to the front case 9. The hinge structure includes a pair of hinges 52 and a core pin. One of the hinges 52 is connected to the first middle frame 51a, and the other one of the hinges 52 is connected to the second middle frame 51b. The hinge 52 is movably connected by a core pin, and can be swung in 180 degrees. The pair of middle frames 51 are locked by interlocking assembly. The four corners of the bottom of the trolley bag are provided with shock-absorbing wheels 4. The trolley handle 2 is installed on the rear case 3. The top of the rear case 3 is provided with a top handle 1, and the side of the front case 9 is provided with a top handle 1.

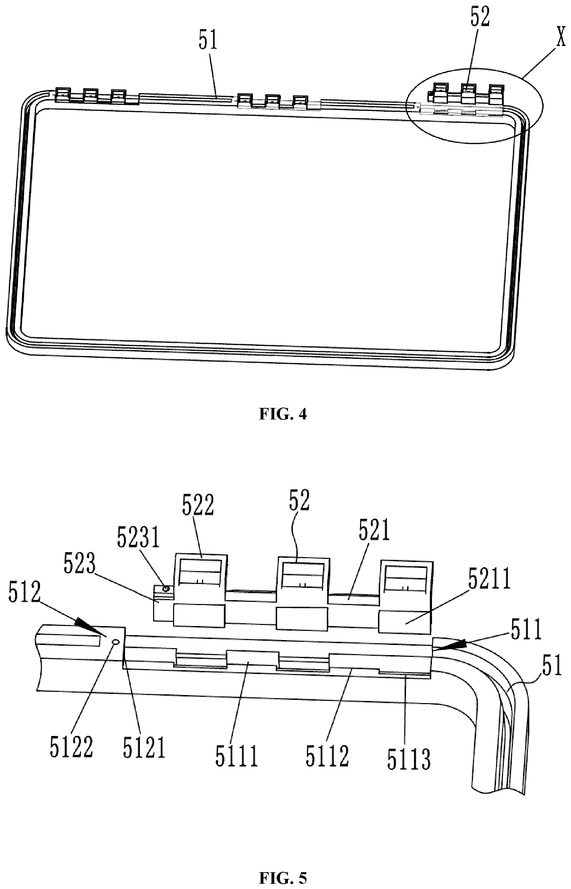

As shown in FIG. 4, FIG. 5, FIG. 6, and FIG. 7, the hinge 52 has a connecting portion 521, and a plurality of rib portions 5211 are provided on one side wall of the connecting portion 521 at intervals along the length direction of the connecting portion 521. The other side wall of the connecting portion 521 is provided with a plurality of rib portions 5211 at intervals along the length direction of the connecting portion 521. The rib portions 5211 on the two side walls of the connecting portion 521 are staggered. The middle frame 51 is provided with a groove portion 511. The bottom surface of the groove portion 511 is provided with a connecting groove 5111, and the side wall of the connecting groove 5111 is provided with a baffle portion 5112 matched with the rib portion 5211. A notch 5113 is formed on the rear side of each baffle portion 5112 corresponding to the rib portion 5211. When the hinges 52 are installed on the middle frames 51, the bottom surface of the baffle portion 5112 abuts the top surface of the rib portion 5211. The top of the connecting portion 521 is connected to a plurality of bushings 522 at equal intervals along the length direction thereof. The bushings 522 are provided with an axis hole 5221 which is adapted to the core pin. The core pin alternately passes through the bushings 522 of the pair of hinges 52 to hinge the pair of hinges 52. In addition, the front end of the connecting portion 521 is connected to the first engaging portion 523. A second engaging portion 512 is provided on the middle frame 51 on the front side of the groove portion 511. A slot 5121 is defined on the second engaging portion 512. The top of the slot 5121 defines a snap hole 5122 penetrating the top surface of the second locking portion 512. The top of the first engagement portion 523 is provided with a snap protrusion 5231 which is matched with the snap hole 5122.

During installation, the rib portion 5211 on the connecting portion 521 is aligned with the notch 5113 to install the connecting portion 521 into the connecting groove 5111. Then, the hinge 52 is pushed along the length direction of the connecting groove 5111, so that the rib portion 5211 on the hinge 52 is moved to the right under the corresponding baffle portion 5112, so that the bottom surface of the baffle portion 5112 abuts the top surface of the rib portion 5211. In addition, during the process of pushing the hinge 52, the first engaging portion 523 is inserted into the slot 5121, and finally the snap protrusion 5231 is inserted into the engaging hole 5122, so that the hinge 52 and the middle frame 51 are connected reliably.

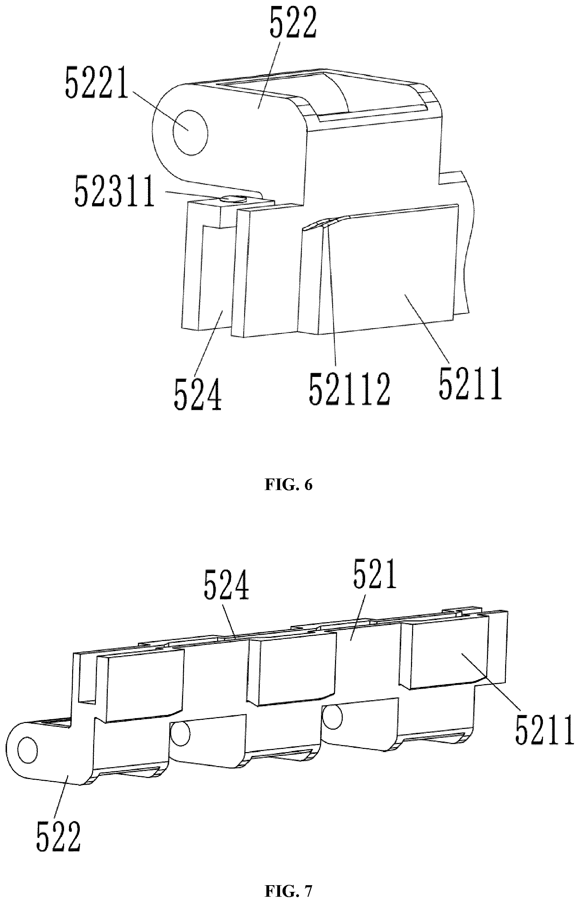

Preferably, as shown in FIG. 6, a guide inclined surface 52311 is provided on the front side of the top of the snap protrusion 5231. The front end of the rib portion 5211 is provided with an inclined guide portion 52112.

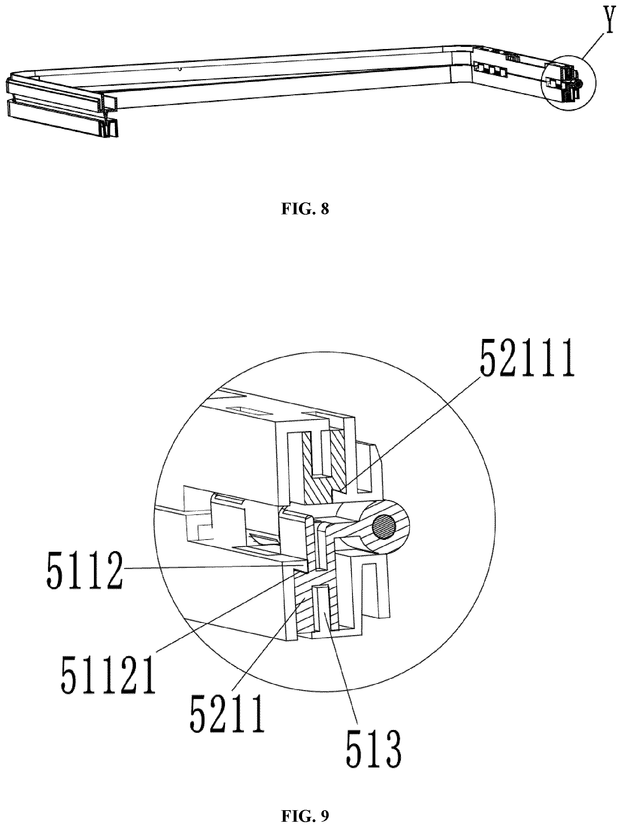

Preferably, as shown in FIG. 8 and FIG. 9, the top surface of the rib portion 5211 is a first inclined surface 52111 which is provided obliquely. The bottom surface of the stopper portion 5112 is a second inclined surface 51121 which is provided obliquely. The included angle between the second inclined surface 51121 and the side wall of the connecting groove 5111 is an acute angle. When the hinges 52 are installed on the middle frames 51, the second inclined surface 51121 abuts against the first inclined surface 52111, so that the fixed connection between the hinge 52 and the middle frame 51 is more reliable.

Preferably, as shown in FIG. 8 and FIG. 9, the bottom of the connecting groove 5111 is provided with a guide boss 513. A guide groove 524 extending through the front and rear surfaces of the guide groove 524 is defined on the bottom wall of the hinge 52 along the longitudinal direction of the hinge 52. The guide groove 524 is slidably matched with the guide boss 513.

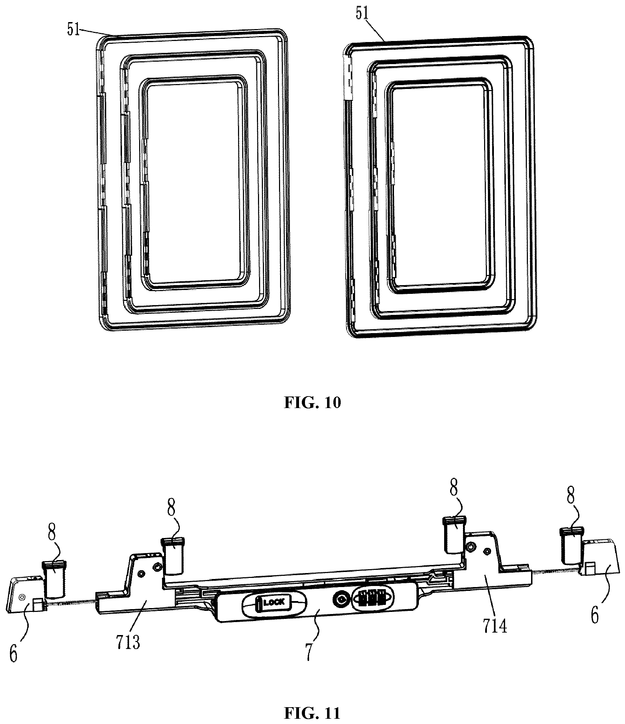

As shown in FIG. 10, the hinge 52 is detachably connected to the middle frame 51, so that the middle frame 51 does not have the limitation of core pulling of the hinge in the prior art, so that the middle frame 51 can be produced in stacks and the simultaneous injection molding in production can be realized, accordingly the molding efficiency of the middle frame 51 is improved.

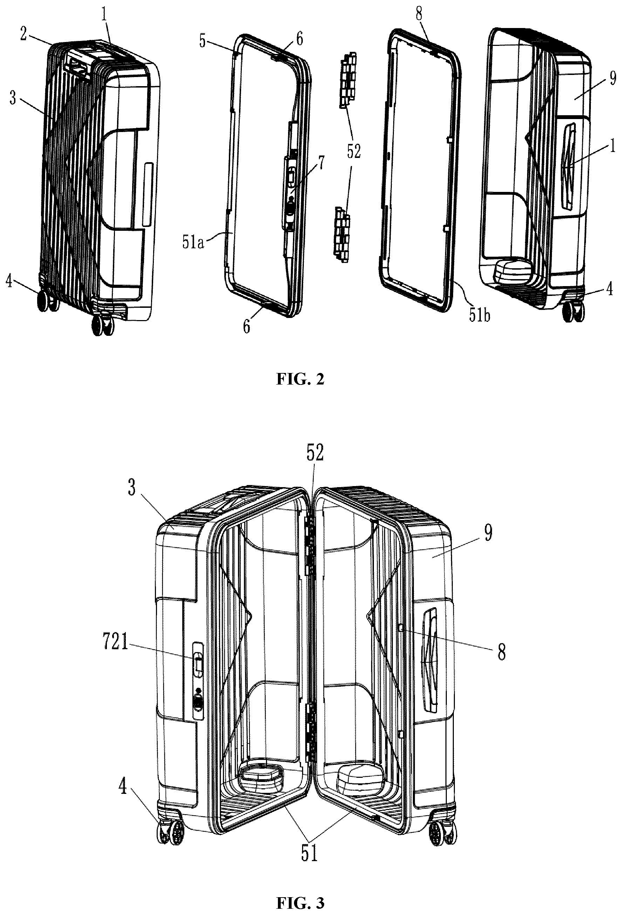

As shown in FIG. 2 and FIG. 11, the interlocking lock assembly includes a main lock 7 and a pair of side locks 6 interlocked with the main lock 7. The main lock 7 is arranged on the side of the first middle frame 51a opposite to the side where the hinge structure is located. The main lock 7 includes a main lock case 71, a control mechanism 73 and a pair of main lock cylinder assemblies 72. The control mechanism 73 and a pair of main lock cylinder assemblies 72 are both disposed in the main lock case 71. In addition, a pair of main lock cylinder assemblies 72 are respectively located on both sides of the control mechanism 73. One side lock 6 is arranged on the upper side of the first middle frame 51a, and the other side lock 6 is arranged on the lower side of the first middle frame 51a. Four lock hooks 8 are provided on the second middle frame 51b. A number of protruding teeth 81 are provided on one side of the lock hook 8. The control mechanism 73 can control the locking and unlocking of the pair of side locks 6 while controlling the locking and unlocking of the pair of main lock cylinder assemblies 72.

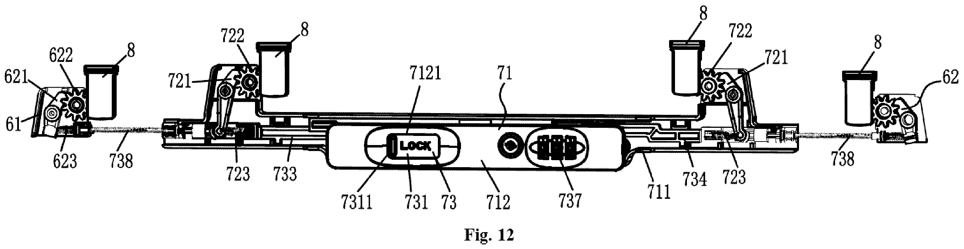

As shown in FIG. 12, FIG. 13 and FIG. 15, the main lock case 71 includes a lock seat 711, a lock cover 712, a first cover 713 and a second cover 714 connected to the lock seat 711. A main lock cavity is formed between the first cover 713 and the second cover 714 and the lock seat 711 respectively. Control mechanism 73 includes a drive assembly and a customs lock 737. The customs lock 737 is installed inside the lock cover 712. The drive assembly is provided in the main lock case 71. Specifically, the drive assembly includes a pusher 731, a pair of reduction gears 732, a first rack 733 and a second rack 734. The pusher 731 is slidably disposed in the main lock case 71. In addition, the push torque 7311 of the pusher 731 is slidably matched with the through hole 7121 on the lock cover 712. Moreover, the push torque 7311 protrudes from the through hole 7121 on the lock cover 712. A top plate portion 7311 is provided on the top of the pusher 731. A rack portion 7312 is provided at the lower portion of the top plate portion 7311. A gear wheel 7321 of a reduction gear 732 meshes with the rack portion 7312. The pinion gear 7322 on the reduction gear 732 meshes with the gear wheel 7321 of the other reduction gear 732. The first rack 733 is slidably arranged in the main lock case 71. The first rack 733 meshes with the pinion 7322 on the other reduction gear 732. The first rack 733 is connected with a main lock cylinder assembly 72. The second rack 734 is slidably arranged in the main lock case 71. The second rack 734 meshes with the pinion 7322 on the other reduction gear 732. The second rack 734 is connected with the other main lock cylinder assembly 72.

As shown in FIG. 12, FIG. 13, and FIG. 14, the main lock cylinder assembly 72 includes a first button 721, a first gear 722 and a first spring 723. The first gear 722 is rotatably arranged in the main lock cavity of the main lock case 71. The first gear 722 can engage with several protruding teeth 81 on the lock hook 8. The first button 721 is rotatably arranged in the main lock cavity of the main lock case 71. One end of the first button 721 is provided with a tooth groove portion 7211 on the side adjacent to the first gear 722. The other end of the first button 721 is movably connected with the first rack 733 or the second rack 734. The first spring 723 is connected and arranged between the other end of the first button 721 and the first rack 733 or the second rack 734. Under the action of the elastic force of the first spring 723, the tooth groove portion 7211 of the first button 721 can be snapped and connected to the teeth of the first gear 722. The first baffle surface 7212 and second baffle surface 7213 of the first button 721 are against the first gear 722, so that the first gear 722 cannot be reversed.

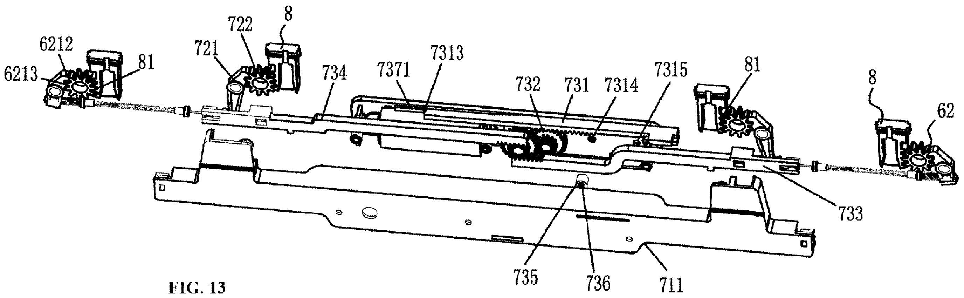

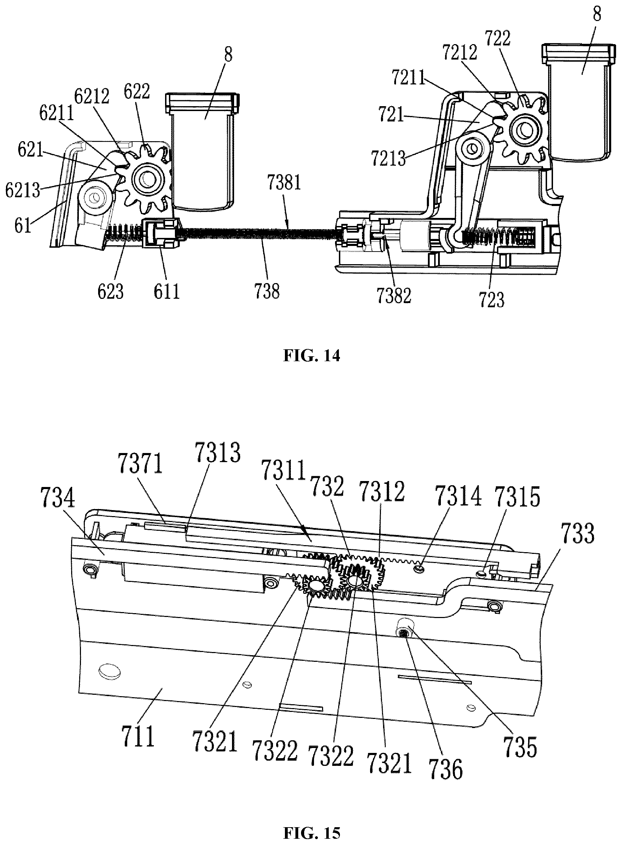

As shown in FIGS. 13 and 14, the side lock 6 includes a side lock case 61 and a side lock cylinder assembly 62 disposed in the side lock case 61. The side lock cylinder assembly 62 includes a second button 621, a second gear 622 and a second spring 623. The second gear 622 is rotatably arranged in the side lock case 61. The second gear 622 can engage with several protruding teeth 81 on the lock hook 8. The second button 621 is rotatably arranged in the side lock case 61. One end of the second button 621 is provided with a second tooth slot portion 6211 on the side adjacent to the second gear 622. The other end of the second button 621 is connected to the first rack 733 or the second rack 734 through a cable 738. The second spring 623 is connected and arranged between the second button 621 and the connecting seat 611 of the side lock case 61. Under the action of the second spring 623, the second tooth groove portion 6211 of the second button 621 is engaged with the teeth of the second gear 622, and the third surface 6212 and the fourth surface 6213 of the second button 621 are against the second gear 622, so that the second gear 622 cannot be reversed.

Preferably, as shown in FIG. 13, FIG. 14, and FIG. 15, the main lock 7 further includes a ball plunger 735 and a ball plunger spring 736. The ball plunger 735 is movably arranged in the main lock case 71. The ball plunger spring 736 is provided between the ball plunger 735 and the main lock case 71. The pusher 731 is provided with a first indication hole 7314 and a second indication hole 7315 which are matched with the ball plunger 735. When in use, the ball plunger 735 is pressed against the pusher 731 by the push force of the ball plunger spring 736, so that the pusher 731 will not move freely. When the ball plunger 735 is fastened on the second indication hole 7315 of the pusher 731, the pusher 731 is kept open by the elastic force of the ball plunger spring 736. In addition, when the ball plunger 735 collides with the pusher 731 under the elastic force of the ball plunger spring 736, a crisp sound will be generated, so that the user can know that the switch is in place by feeling the feedback of the sound.

As shown in FIG. 14, the cable 738 includes a core cable 7382 and an external sleeve 7381 sheathed outside the core cable 7382. One end of the external sleeve 7381 is connected to the connecting seat 611 of the side lock case 61. The other end of the external sleeve 7381 is connected to the main lock case 71. One end of the core cable 7382 is connected to the second button 621. The other end of the core cable 7382 is connected to the first rack 733 or the second rack 734.

As shown in FIG. 3, FIG. 12 and FIG. 16, when the pusher 731 is in the off state, the trolley bag is closed, and the lock hook 8 on the second middle frame 51b drives the first gear 722 of the main lock cylinder assembly 72 to rotate, and the first gear 722 rotates to force the first button 721 to overcome the elastic force of the first spring 723. After the lock hook 8 buckles the next level, the first button 721 will be fastened by the force of the first spring 723 to fasten the first gear 722, and a collision sound will be generated at the same time, so that the user knows the lock hook 8 is in place. At the same time, the lock hook 8 will also drive the second gear 622 of the side lock cylinder assembly 62 to rotate, and the rotation of the second gear 622 forces the second button 621 to overcome the elastic force of the second spring 623, and the lock hook 8 locks the second button 621 after the next level. The second gear 622 will be fastened by the force of the second spring 623, and a collision sound will be generated to let the user know that the lock hook 8 is fastened. Because the first button 721 is pushed by the first spring 723, the first baffle surface 7212 and the second baffle surface 7213 of the first button 721 stand against the first gear 722, so that the first gear 722 cannot be reversed. Since the second button 621 is pushed by the second spring 623, the third baffle surface 6212 and the fourth baffle surface 6213 of the second button 621 stand against the second gear 622, so that the second gear 622 cannot be reversed, and the trolley bag is closed. At the same time, the contact ball 735 is pressed against the pusher 731 by the thrust force of the ball plunger spring 736, so that the pusher 731 will not move freely. When the user closes the customs lock 737, the pressing piece 7371 of the customs lock 737 bears against the rear surface 7313 of the pusher 731, so that the lock is in a closed state. When the user needs to open the trolley bag, push the pusher 731. The pusher 731 drives the gear wheel 7321 of the reduction gear 732 to rotate, and the pinion 7322 on the reduction gear 732 drives the gear wheel 7321 of the other reduction gear 732 to rotate, so that the pinion 7322 on the other reduction gear 732 drives the first rack 733 and the second rack 734 move, further make first rack 733 and second rack 734 drive the corresponding first button 721 to rotate, so that first button 721 is separated from first gear 722, so that first gear 722 can rotate freely, thereby making the lock The hook 8 can be freely disengaged from the main lock 7. At the same time, the first rack 733 and the second rack 734 drive the corresponding cables 738 to move, so that the second button 621 is separated from the second gear 622, so that the second gear 622 can rotate freely, so that the lock hook 8 can be free from the side lock 6, and the bag is opened.

In addition, the number of side locks 6 can also be increased or decreased according to the size of the trolley bag.

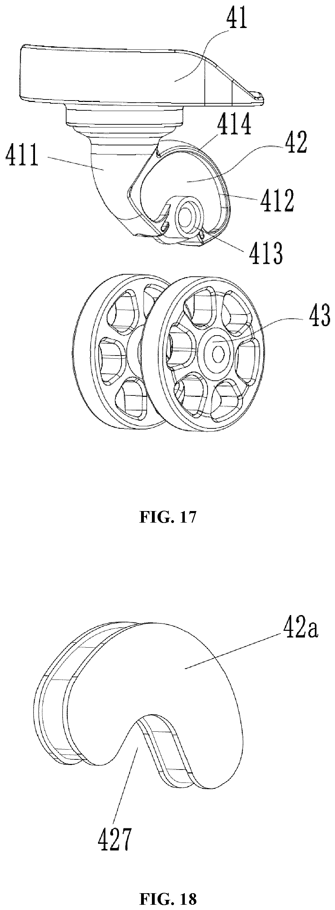

As shown in FIG. 17 and FIG. 18, the shock-absorbing wheel 4 includes a wheel seat assembly 41 and a pair of rollers 43. Wheel seat assembly 41 includes axle seat 411. The lower part of the axle seat 411 extends backward to form a tailstock 414. A roller seat 413 is connected to the lower part of the tailstock 414. A buffer cavity 412 is formed between the tailstock 414 and the roller seat 413. In the buffer cavity 412, a cushion pad 42 is formed by secondary injection molding. The cushion pad 42 is the first cushion pad 42a. The first cushion pad 42a is made of soft rubber. The roller seat 413 sinks into the recessed portion 427 of the first cushion pad 42a. A pair of rollers 43 are mounted on the roller seat 413. When the shock-absorbing wheel 4 rotates and falls, the punched first cushion pad 42a has the effect of shock-absorbing, which more effectively protects the trolley bag, and the assembly is simple and cost-saving.

Preferably, as shown in FIG. 18, a guide boss is provided on the inner peripheral wall of the buffer cavity 412. The outer periphery of the first cushion pad 42a is provided with a positioning groove matched with the positioning boss.

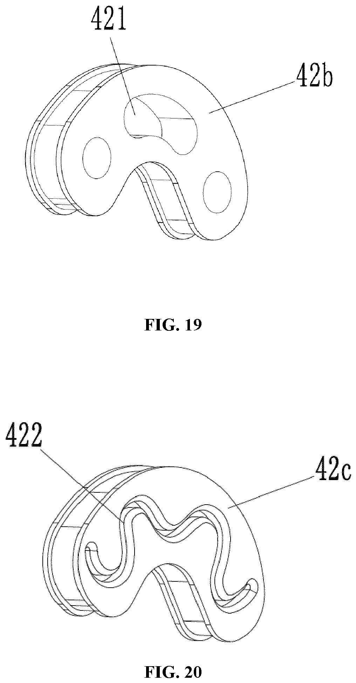

In another embodiment, as shown in FIG. 19, the cushion pad 42 is the second cushion pad 42b. The difference between the second cushion pad 42b and the first cushion pad 42a is that the second cushion pad 42b is provided with three buffer holes 421. Both ends of the buffer hole 421 penetrate through the two side walls of the second cushion pad 42b. Among them, two buffer holes 421 are round holes, and one buffer hole 421 is a special-shaped hole in a meniscus shape. The buffer holes 421 are added according to the size of the trolley bag so as to enhance the buffer effect.

In another embodiment, as shown in FIG. 20, the cushion pad 42 is a third cushion pad 42c. The difference between the third cushion pad 42c and the first cushion pad 42a is that a buffer groove 422 is formed on the side wall of the third cushion pad 42c. The buffer groove 422 is a special-shaped groove, and the buffer groove 422 is added according to the size of the trolley bag, so as to enhance the buffer effect.

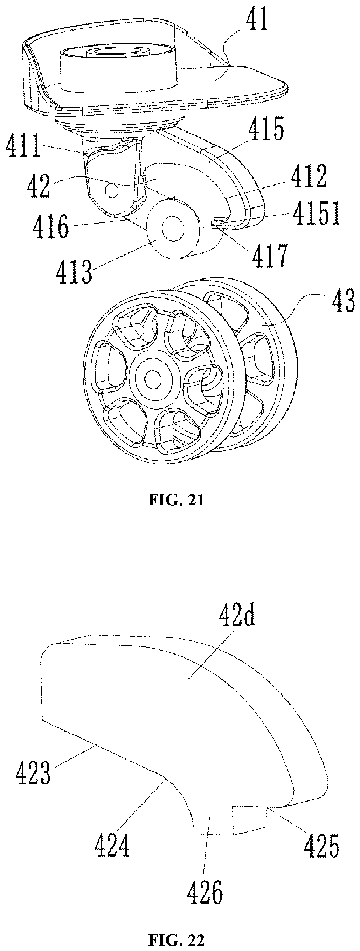

In another embodiment, as shown in FIG. 21 and FIG. 22, the shock-absorbing wheel 4 includes a wheel seat assembly 41, a cushion pad 42 and a pair of rollers 43. The wheel seat assembly 41 includes a mounting seat and an axle seat 411. The upper end of the shaft seat 411 is rotatably connected with the mounting seat. The middle portion of the axle seat 411 extends backward to form a rear seat 415. A swing shaft 416 is pivotally connected to the lower part of the shaft seat 411. The other end of the swing shaft 416 extends below the rear seat 415 and is connected with a roller seat 413. A buffer cavity 412 is formed between the swing shaft 416, the roller seat 413 and the rear seat 415. The cushion pad 42 is a fourth cushion pad 42d. The fourth cushion pad 42d is embedded in the buffer cavity 412. The roller seat 413 abuts against the main bearing surface 424 at the bottom of the middle portion of the fourth cushion pad 42d. The lift portion 4151 at the rear of the rear seat 415 abuts against the limit bottom surface 425 at the bottom of the rear portion of the cushion pad 42d. An opening 417 is formed between the roller seat 413 and the lift portion 4151. The protrusions 426 at the bottom of the fourth cushion pad 42d are embedded in the openings 417. The swing shaft 416 abuts against the auxiliary bearing surface 423 at the bottom of the front part of the fourth cushion pad 42d. The cushion pad 42d is made of soft rubber material. During assembly, the wheel seat assembly 41 and the swing shaft 416 are first connected together. Then, the fourth cushion pad 42d is injection-molded, so that the middle of the wheel seat assembly 41 and the swing shaft 416 is combined with the fourth cushion pad 42d. A pair of rollers 43 are installed on the roller seat 413, so that when the shock-absorbing wheel 4 rotates and falls, the stamping cushion pad 42d has the effect of shock-absorbing, preventing the impact from directly acting on the trolley bag, effectively protecting the trolley bag case, and simple assembly and cost saving.

Preferably, as shown in FIG. 1, the rear case 3 is provided with vertical stripes 10, a first diagonal stripes 11, and second diagonal stripes 12 protruding from the outer surface of the rear case 3. The front case 9 is also provided with vertical stripes 10, first diagonal stripes 11 and second diagonal stripes 12 that protrude from the outer surface of the rear case 3. Exquisite patterns are formed on the outer surface, making the trolley bag beautiful in appearance.

As shown in FIG. 2 and FIG. 3, when in use, the push button 721 is pushed, and the plurality of lock hooks 8 of the trolley bag simultaneously turn on. At this point, the trolley bag can be swung to between opened and closed state in 180 degrees. When the trolley bag is full of luggage, the lock hook 8 can adjust the closing distance so that the trolley bag can be easily closed. In addition, the wheel seat assembly 41 of the installed shock-absorbing wheel 4 uses the soft rubber injection molding to produce a buffer effect to realize the shock-absorbing function, which reduces the shaking of the trolley bag during walk. With the middle frame structure, the trolley bag is more stable, which improves the deformation of the conventional trolley bag when it is full of luggage, which makes it difficult to drag and walk. In addition, the hinge 52 and the middle frame 51 are separated and connected by a buckle structure, which eliminates the need for screw fastening and makes the assembly easier. This reduces labor costs, and the separation of the hinge 52 and the middle frame 51 reduces the molding cycle of the middle frame 51. At the same time, the mold of the middle frame 51 is simplified, so that the mold of the middle frame 51 can be produced by stacking, which improves the molding efficiency of the middle frame 51, and the assembly is simple, reliable, and cost-saving.

## Claims

1. A trolley bag with separated middle frame structure and hinge and having shock-absorbing structure, comprising a trolley handle (2), a rear case (3), a middle frame structure (5), and a front case (9); the middle frame structure (5) includes a hinge structure and a pair of middle frames (51); one of the pair of middle frames (51) is connected to the rear case (3), and the other one is connected to the front case (9); wherein the hinge structure includes a pair of hinges (52) and a core pin, one of the pair of hinges (52) is connected to one of the middle frames (51), the other one of the hinges (52) is connected to the other one of the middle frames (51); the pair of hinges (52) are movably connected through the core pin; the pair of middle frames (51) is locked together by an interlocking assembly; **characterized in that** shock-absorbing wheels (4) are arranged at four corners of a bottom of the trolley bag; wherein the hinge (52) has a connecting portion (521); a side wall of the connecting portion (521) is provided with at least one rib portion (5211) at intervals along the length of the connecting portion (521); the middle frame (51) is provided with a groove portion (511), and a bottom surface of the groove portion (511) is provided with a connecting groove (5111); a baffle portion (5112) matched with the rib portion (5211) is arranged on a side wall of the connecting groove (5111); a notch (5113) adapted for the rib portion (5211) is formed on a rear side of the baffle portion (5112); when the hinges (52) are installed on the middle frames (51), the bottom surface of the baffle portion (5112) abuts against a top surface of the rib portion (5211); the top of the connecting portion (521) is spaced and connected to a plurality of bushings (522) along the length of the connecting portion (521); each of the bushings (522) is provided with an axis hole (5221) matching with the core pin; the bushings (522) of the pair of hinges (52) are hinged through the core pin.

2. The trolley bag according to claim 1, **characterized in that** a front end of the connecting portion (521) is connected to a first engaging portion (523); a front side of the groove portion (511) is provided with a second engaging portion (512); a slot (5121) is opened on the second engaging portion (512); the first engagement portion (523) is inserted into the slot (5121) to form a snap connection with the second engagement portion (512).

3. The trolley bag according to claim 2, **characterized in that** a top of the slot (5121) is provided with a snap hole (5122), and a top of the first engagement portion (523) is provided with a snap protrusion (5231) adapted for the snap hole (5122).

4. The trolley bag according any one of the preceding claims, **characterized in that** a top surface of the rib portion (5211) is a first inclined surface (52111) which is formed obliquely; a bottom surface of the baffle portion (5112) is a second inclined surface (51121) which is formed obliquely; an angle between the second inclined surface (51121) and the side wall of the connecting groove (5111) is an acute angle; when the hinges (52) are installed on the middle frames (51), the second inclined surface (51121) abuts against the first inclined surface (52111).

## Patentansprüche

1. Ein Trolley-Koffer mit einer getrennten Mittelrahmenstruktur und Scharnier sowie einer stoßdämpfenden Struktur, umfassend einen Trolley-Griff (2), ein hinteres Gehäuse (3), eine Mittelrahmenstruktur (5) und ein vorderes Gehäuse (9); die Mittelrahmenstruktur (5) umfasst eine Scharnierstruktur und ein Paar Mittelrahmen (51); einer aus dem Paar der Mittelrahmen (51) ist mit dem hinteren Gehäuse (3) verbunden, und der andere mit dem vorderen Gehäuse (9); wobei die Scharnierstruktur ein Paar Scharniere (52) und einen Kernstift umfasst, eines aus dem Paar der Scharniere (52) ist mit einem der Mittelrahmen (51) verbunden, das andere Scharnier (52) mit dem anderen Mittelrahmen (51); das Paar der Scharniere (52) ist über den Kernstift beweglich miteinander verbunden; das Paar der Mittelrahmen (51) wird durch eine Verriegelungseinheit zusammengehalten; **gekennzeichnet dadurch, dass** stoßdämpfende Räder (4) an vier Ecken eines Bodens des Trolley-Koffers angeordnet sind; wobei das Scharnier (52) einen Verbindungsteil (521) aufweist; eine Seitenwand des Verbindungsteils (521) ist mit mindestens einem Rippenabschnitt (5211) in Abständen entlang der Länge des Verbindungsteils (521) versehen; der Mittelrahmen (51) ist mit einem Nutteil (511) versehen, und eine Bodenfläche des Nutteils (511) ist mit einer Verbindungsnut (5111) versehen; ein Sperrelement (5112), das mit dem Rippenabschnitt (5211) korrespondiert, ist an einer Seitenwand der Verbindungsnut (5111) angeordnet; eine Aussparung (5113), die für den Rippenabschnitt (5211) geeignet ist, ist auf einer Rückseite des Sperrelements (5112) ausgebildet; wenn die Scharniere (52) an den Mittelrahmen (51) montiert sind, stützt die Bodenfläche des Sperrelements (5112) gegen eine Oberfläche des Rippenabschnitts (5211); die Oberseite des Verbindungsteils (521) ist entlang der Länge des Verbindungsteils (521) mit einer Mehrzahl von Buchsen (522) beabstandet und verbunden; jede der Buchsen (522) ist mit einem Achsloch (5221) versehen, das mit dem Kernstift korrespondiert; die Buchsen (522) des Scharnierpaars (52) sind durch den Kernstift scharniert.

2. Der Trolley-Koffer nach Anspruch 1, **gekennzeichnet dadurch, dass** ein vorderes Ende des Verbindungsteils (521) mit einem ersten Eingriffsteil (523) verbunden ist; eine Vorderseite des Nutteils (511) ist mit einem zweiten Eingriffsteil (512) versehen; ein Schlitz (5121) ist auf dem zweiten Eingriffsteil (512) geöffnet; das erste Eingriffsteil (523) ist in den Schlitz (5121) eingesetzt, um eine Schnappverbindung mit dem zweiten Eingriffsteil (512) zu bilden.

3. Der Trolley-Koffer nach Anspruch 2, **gekennzeichnet dadurch, dass** eine Oberseite des Schlitzes (5121) mit einer Schnappöffnung (5122) versehen ist und eine Oberseite des ersten Eingriffsteils (523) mit einem Schnappvorsprung (5231) versehen ist, der für die Schnappöffnung (5122) geeignet ist.

4. Der Trolley-Koffer nach einem der vorhergehenden Ansprüche, **gekennzeichnet dadurch, dass** eine Oberfläche des Rippenabschnitts (5211) eine erste geneigte Fläche (52111) ist, die schräg ausgebildet ist; eine Unterfläche des Sperrelements (5112) ist eine zweite geneigte Fläche (51121), die schräg ausgebildet ist; ein Winkel zwischen der zweiten geneigten Fläche (51121) und der Seitenwand der Verbindungsnut (5111) ist ein spitzer Winkel; wenn die Scharniere (52) an den Mittelrahmen (51) montiert sind, stützt die zweite geneigte Fläche (51121) gegen die erste geneigte Fläche (52111).

## Revendications

1. Un sac trolley avec structure de cadre médian séparée et charnière et ayant une structure absorbant les chocs, comprenant une poignée de trolley (2), un boîtier arrière (3), une structure de cadre médian (5), et un boîtier avant (9) ; la structure de cadre médian (5) comprend une structure de charnière et une paire de cadres médians (51) ; l'un de la paire de cadres médians (51) est connecté au boîtier arrière (3), et l'autre est connecté au boîtier avant (9) ; ladite structure de charnière comprend une paire de charnières (52) et un axe central, l'une de la paire de charnières (52) est connectée à l'un des cadres médians (51), l'autre charnière (52) est connectée à l'autre cadre médian (51) ; la paire de charnières (52) est connectée de manière mobile par l'axe central ; la paire de cadres médians (51) est verrouillée ensemble par un ensemble d'interverrouillage ; **caractérisé en ce que** des roues absorbant les chocs (4) sont disposées aux quatre coins d'un fond du sac trolley ; ladite charnière (52) possède une partie de connexion (521) ; une paroi latérale de la partie de connexion (521) est pourvue d'au moins une partie de nervure (5211) à intervalles le long de la longueur de la partie de connexion (521) ; le cadre médian (51) est pourvu d'une partie de gorge (511), et une surface inférieure de la partie de gorge (511) est pourvue d'une rainure de connexion (5111) ; une partie de déflecteur (5112) correspondant à la partie de nervure (5211) est disposée sur une paroi latérale de la rainure de connexion (5111) ; une encoche (5113) adaptée pour la partie de nervure (5211) est formée sur un côté arrière de la partie de déflecteur (5112) ; lorsque les charnières (52) sont installées sur les cadres médians (51), la surface inférieure de la partie de déflecteur (5112) bute contre une surface supérieure de la partie de nervure (5211) ; le haut de la partie de connexion (521) est espacé et relié à plusieurs douilles (522) le long de la longueur de la partie de connexion (521) ; chacune des douilles (522) est pourvue d'un trou d'axe (5221) correspondant à l'axe central ; les douilles (522) de la paire de charnières (52) sont articulées par l'axe central.

2. Le sac trolley selon la revendication 1, **caractérisé en ce qu'**une extrémité avant de la partie de connexion (521) est connectée à une première partie d'engagement (523) ; un côté avant de la partie de gorge (511) est pourvu d'une seconde partie d'engagement (512) ; une fente (5121) est ouverte sur la seconde partie d'engagement (512) ; la première partie d'engagement (523) est insérée dans la fente (5121) pour former une connexion par encliquetage avec la seconde partie d'engagement (512).

3. Le sac trolley selon la revendication 2, **caractérisé en ce que** le haut de la fente (5121) est pourvu d'un trou d'encliquetage (5122), et le haut de la première partie d'engagement (523) est pourvu d'une saillie d'encliquetage (5231) adaptée pour le trou d'encliquetage (5122).

4. Le sac trolley selon l'une quelconque des revendications précédentes, **caractérisé en ce que** la surface supérieure de la partie de nervure (5211) est une première surface inclinée (52111) formée obliquement ; une surface inférieure de la partie de déflecteur (5112) est une seconde surface inclinée (51121) formée obliquement ; un angle entre la seconde surface inclinée (51121) et la paroi latérale de la rainure de connexion (5111) est un angle aigu ; lorsque les charnières (52) sont installées sur les cadres médians (51), la seconde surface inclinée (51121) bute contre la première surface inclinée (52111).
